# EUROPEAN PATENT SPECIFICATION

(11) **EP 3 374 574 B1**
(45) Date of publication and mention of the grant of the patent: **13.07.2022**
(21) Application number: 15908230.4
(22) Date of filing: 13.11.2015
(51) Int. Cl.: E03B 3/03, E03B 3/02

(54) **MOBILE DEVICE TO COLLECT WATER**
MOBILE VORRICHTUNG ZUM SAMMELN VON WASSER
DISPOSITIF MOBILE DE COLLECTE D'EAU

(43) Date of publication of application: 19.09.2018
(73) Proprietor: QF Technologies AS, 3630 Rodberg (NO)
(72) Inventor: LARSON, Ralf, 3544 Turnhovd (NO)
(74) Representative: Bjerkén Hynell KB
(86) International application number: PCT/IB2015/002208
(87) International publication number: WO 2017/081505

(56) References cited:
- WO-A1-02/097917
- WO-A1-2015/122852
- WO-A2-2011/084041
- WO-A2-2011/084041
- WO-A2-2011/084041
- GB-A- 1 237 142
- GB-A- 2 441 539
- SE-A1- 1 500 300
- US-A- 3 730 120
- US-A- 4 092 827
- US-B2- 7 726 906

## Description

### BACKGROUND AND PROBLEM

The resources of drinking water are strongly restricted in many countries throughout the world. In many countries you have to walk long distances to collect and carry water back home. But also a highly industrialized country as China is suffering from polluted drinking water. Another use is in seas and lakes with salt content or contaminated, in small crafts as rescue vessels life rafts and recreation vessels where you have to bring the drinking water.

Rainwater is often clean and free of charge. Inflatable pools can be used to collect rainwater, but then you have to pump the water out of the pool as the bottom of the pool is constructed to rest on a planar ground surface. Bathing pools often lack arrangements for anchoring making them easily moved away by the wind when not filled with water. To build a support to raise the pool above the ground level is expensive and time consuming.

The patent document WO 02/097917 discloses a rain collecting apparatus comprising inflatable ring-shaped walls, wherein a centered funnel passes through a lower membrane to a conduit and a collection container. The configuration allows the device to be rapidly converted between various modes of operation, i. e. between rain collecting and cooking. In the event it is necessary to increase the volume of the apparatus for rain collecting, additional rings may be used to increase the height of the walls.

In the patent document WO 2015/122852 a freshwater harvester or cluster of freshwater harvesters for collecting freshwater is disclosed. The freshwater includes rainwater, condensate water and dew water, which exist in natural environment. These devices may also be termed freshwater collector and cluster of freshwater collector. The freshwater collector has an extended pan area whose bottom is connected to a drainage connector. The freshwater collector or cluster is further supported by floats or buoys such that the freshwater collector or cluster can cover a large surface area of water body, such as sea, river and lake for collecting the freshwater continuously.

The patent document WO 2011/084041 relates to a device for collecting rainwater in open spaces in rural and urban environments. The rain collector comprises five main components: 1) mounting system, 2) collection system, 3) conduction system, 4) flow-regulation system, and 5) framework system. The five systems that jointly make up the rainwater collector are suitable for collecting, conveying and regulating the flow of the water, conveying said water to a storage device, from which water can be recovered and made available for human use with no further treatment. The device can be adapted to rainwater collection systems in urban areas and industrial areas as well as to small-scale farming systems and greenhouses.

The patent document GB1237142 relates to a water collection device comprising a series of inflatable plastic rings secured to each other and carrying a floor and a deck. The deck is provided with an orifice leading to the interior of the device and water is collected inside the device between the floor and deck.

### THE OBJECT OF THE PRESENT INVENTION AND A WAY TO SOLVE THE PROBLEM

The present invention is working as a mobile rainwater collector both for use on land and on water. When not inflated it is easy to deploy said mobile rainwater collector by aircrafts or helicopters or by manual movement as it has both low weight and volume. Comprising at least one supporting rack mentioned support walls to carry a funnel shaped membrane with an outlet hose, the one end of which is connected to the outlet of said funnel shaped membrane and the other end of which is being placed outside said support walls and at a level above the ground/water surface allowing the draining to take place by gravity to one or more transport containers. The outlet of the collected rainwater can contain a water treatment filter e.g. activated carbon.

The invention is equipped with attachment eyelets for securing purposes.

### DESCRIPTION OF ONE WAY OF A WORKING EXAMPLE

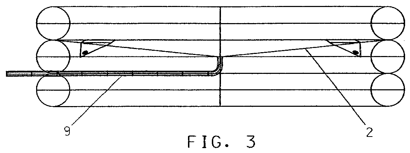

An embodiment of the invention according to claim 1 is shown in figure 3. Embodiments according to claims 2 to 5 are illustrated in the figures and/or described below.

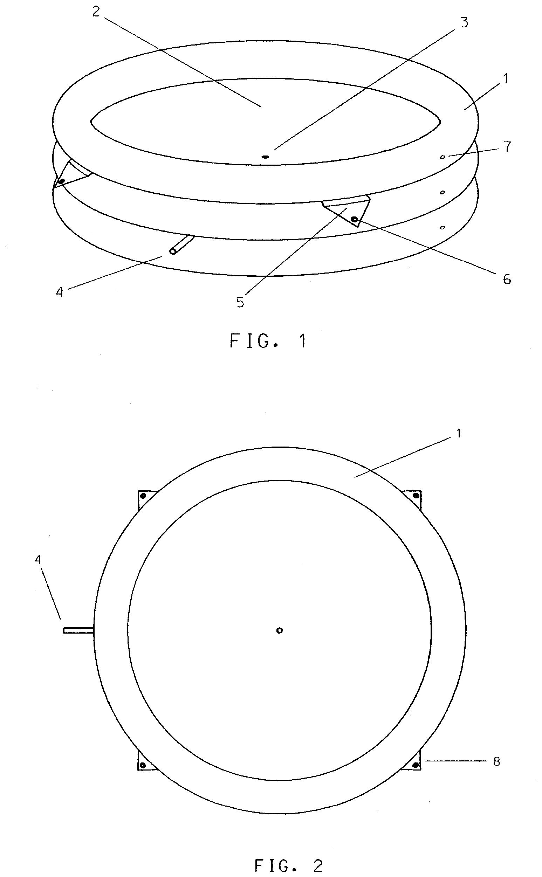

By using a membrane 2 Fig. 3, of a weld able PVC plastic material as a funnel with a centrally positioned drain hole 3 connected to an outlet hose 9 and that the outer edges of said membrane is attached to an inflatable ring shaped wall 1, see Fig. 1, so that the outlet 4 of the outlet hose 9 is situated on such a height over the ground/water surface that a draining by gravity can take place to a suitable container/can (not shown in the drawing) as the membrane 2 will collect rain or condense water. The height of the support wall 1 shall also be compensated to assure a floating on a water surface.

To stop wind and waves from moving the equipment it is preferably equipped with anchoring and fastening means 8 made from welded plastic tabs having reinforced hole eyelets 6 or staples. At these eyelets or staples ropes are attached and secured by tent pegs (not shown on the drawing) or to a boat or a bridge, or to a bottom anchoring means.

When the air in the supporting walls is deflated through the air valves 7 and the equipment being folded it is easy to move having a size and a weight as a tent for several persons and being stored in a transparent bag.

### DESCRIPTION OF THE DRAWINGS

The invention will be more closely described below in connection to the enclosed drawings showing one embodiment. Thus, the invention is not restricted to just this shown embodiment but other examples can be made within the scope of the annexed claims.
Fig. 1 is a 3-D view of equipment
Fig. 2 is a plan view from above, and
Fig. 3 is a transparent side view

### LIST OF THE USED REFERENCES

1, inflatable supporting wall
2, funnel membrane
3, drain hole
4, outlet
5, anchoring tab
6, eyelet
7, air valve
8, anchoring attachment
9, outlet hose

## Claims

1. A mobile device for collecting rainwater, said device comprising:
at least one ring shaped inflatable support wall (1) to allow the device to float on water,
a funnel-shaped rainwater collecting membrane (2) raised to a level of the at least one inflatable support wall when inflated, where the outer edge of said membrane is attached to the at least one inflatable support wall (1),
an outlet hose (9) having two ends, and,
wherein said device is arranged to allow draining of rainwater to take place by gravity through a centrally positioned drain hole (3) of the membrane (2) and through the outlet hose (9),
one end of said outlet hose (9) being connected to the centrally positioned drain hole (3) of the membrane (2) at the underside of said membrane (2) wherein the outlet of the other end of the outlet hose (9) is arranged outside of said at least one inflatable support wall (1) so that the outlet (4) is situated at a height over water when the at least one inflatable support wall (1) is inflated and floating on water,
**characterized in that**:
the at least one support wall (1) consists of three vertically directly interconnected ring-shaped inflatable support wall segments,
the outer edge of said membrane (2) is attached to the junction between the upper support wall segment and the middle support wall segment, and
the outlet hose (9) passes through the junction between the middle support wall segment and the lower support wall segment.

2. Device according to claim 1, wherein the funnel membrane (2) outlet hole (3) or the outlet hose (9) is provided with a filter for water treatment e.g. activated carbon.

3. Device according to claim 1, wherein attachment eyelets (6) are fitted for anchoring the device.

4. Device according to claim 1, wherein a holding rope is, or handles are, located on top of the at least one support wall.

5. Device according to claim 1, wherein a lifting belt is fitted to the top of the device, above the outlet hose (9) for applying a collection canister.

## Patentansprüche

1. Mobile Vorrichtung zum Auffangen von Regenwasser, die Vorrichtung umfassend:
mindestens eine ringförmige aufblasbare Stützwand (1), die es der Vorrichtung ermöglicht, auf dem Wasser zu schwimmen,
eine trichterförmige Regenwasserauffangmembran (2), die, wenn sie aufgeblasen ist, auf ein Niveau der mindestens einen aufblasbaren Stützwand angehoben wird, wobei der äußere Rand der Membran an der mindestens einen aufblasbaren Stützwand (1) befestigt ist,
einen Auslassschlauch (9), der zwei Enden aufweist, und
wobei die Vorrichtung so angeordnet ist, dass sie ein Ablassen von Regenwasser durch die Schwerkraft durch ein zentral positioniertes Ablassloch (3) der Membran (2) und durch den Auslassschlauch (9) ermöglicht,
wobei ein Ende des Auslassschlauchs (9) mit dem zentral positionierten Ablassloch (3) der Membran (2) an der Unterseite der Membran (2) verbunden ist, wobei der Auslass des anderen Endes des Auslassschlauchs (9) außerhalb der mindestens einen aufblasbaren Stützwand (1) angeordnet ist, sodass sich der Auslass (4) in einer Höhe über Wasser befindet, wenn die mindestens eine aufblasbare Stützwand (1) aufgeblasen ist und auf dem Wasser schwimmt,
**dadurch gekennzeichnet, dass**:
die mindestens eine Stützwand (1) aus drei vertikal direkt miteinander verbundenen ringförmigen aufblasbaren Stützwandsegmenten besteht,
der äußere Rand der Membran (2) an der Verbindungsstelle zwischen dem oberen Stützwandsegment und dem mittleren Stützwandsegment befestigt ist, und
der Auslassschlauch (9) durch die Verbindungsstelle zwischen dem mittleren Stützwandsegment und dem unteren Stützwandsegment hindurchgeht.

2. Vorrichtung nach Anspruch 1, wobei das Auslassloch (3) der Trichtermembran (2) oder der Auslassschlauch (9) mit einem Filter zur Wasserbehandlung, z. B. Aktivkohle, versehen ist.

3. Vorrichtung nach Anspruch 1, wobei Befestigungsösen (6) zum Verankern der Vorrichtung angebracht sind.

4. Vorrichtung nach Anspruch 1, wobei auf der mindestens einen Stützwand ein Halteseil angeordnet ist oder Griffe angeordnet sind.

5. Vorrichtung nach Anspruch 1, wobei an der Oberseite der Vorrichtung oberhalb des Auslassschlauchs (9) ein Hebeband für den Einsatz eines Auffangbehälters angebracht ist.

## Revendications

1. Dispositif mobile de collecte d'eau de pluie, ledit dispositif comprenant :
au moins une paroi de support gonflable en forme d'anneau (1) destinée à permettre au dispositif de flotter sur l'eau,
une membrane de collecte d'eau de pluie en forme d'entonnoir (2) surélevée jusqu'à un niveau de l'au moins une paroi de support gonflable lorsqu'elle est gonflée, où le bord extérieur de ladite membrane est fixé à l'au moins une paroi de support gonflable (1),
un tuyau de sortie (9) ayant deux extrémités, et,
dans lequel ledit dispositif est disposé pour permettre l'évacuation de l'eau de pluie par gravité à travers un trou d'évacuation positionné au centre (3) de la membrane (2) et à travers le tuyau de sortie (9),
une extrémité dudit tuyau de sortie (9) étant connectée au trou d'évacuation positionné au centre (3) de la membrane (2) au niveau de la face inférieure de ladite membrane (2) dans lequel la sortie de l'autre extrémité du tuyau de sortie (9) est disposée à l'extérieur de ladite au moins une paroi de support gonflable (1) de sorte que la sortie (4) est située à une hauteur au-dessus de l'eau lorsque l'au moins une paroi de support gonflable (1) est gonflée et flottante sur l'eau,
**caractérisé en ce que** :
l'au moins une paroi de support (1) est constituée de trois segments de paroi de support gonflable en forme d'anneau, directement interconnectés verticalement,
le bord extérieur de ladite membrane (2) est fixé à la jonction entre le segment de paroi de support supérieur et le segment de paroi de support médian, et
le tuyau de sortie (9) passe à travers la jonction entre le segment de paroi de support médian et le segment de paroi de support inférieur.

2. Dispositif selon la revendication 1, dans lequel l'orifice de sortie (3) de la membrane en entonnoir (2) ou le tuyau de sortie (9) est muni d'un filtre pour le traitement de l'eau, par exemple du charbon actif.

3. Dispositif selon la revendication 1, dans lequel des œillets de fixation (6) sont prévus pour ancrer le dispositif.

4. Dispositif selon la revendication 1, dans lequel une corde de maintien est, ou des poignées sont, disposée(s) au-dessus de l'au moins une paroi de support.

5. Dispositif selon la revendication 1, dans lequel une courroie de levage est prévue sur la partie supérieure du dispositif, au-dessus du tuyau de sortie (9) pour appliquer un récipient collecteur.
